# EUROPEAN PATENT APPLICATION

(11) **EP 1 234 992 A2**
(43) Date of publication of application: **28.08.2002**
(21) Application number: 02251238.8
(22) Date of filing: 22.02.2002
(51) Int. Cl.: F16D 55/228

(54) **A brake rotor assembly and caliper assembly**

(30) Priority: 26.02.2001 US 793261
(71) Applicant: Meritor Heavy Vehicle Systems, LLC, Troy, MI 48084 (US)
(72) Inventor: Hayford, Roy Lee, Michigan 48240 (US); Dreher, Juergen, 56218 Muelheim-Kaerlich (DE); Giering, Wilfried, 56743 Mendig (DE); Brademeyer, David, Ohio 45459 (US); Williams, Neil, NP44 6EN (GB); Kyrtsos, Christos, Michigan 48076 (US); Anderson, Gerald, Michigan 48371 (US)
(74) Representative: Jones, John Bryn

(57) **Abstract**

A multi disc brake assembly employing a combination fixed rotor (114) and a plurality of axially moving floating rotors (115). The fixed rotor is attached to and rotates in combination with a wheel hub (119). The plurality of floating rotors are slidingly attached to the fixed rotor and a plurality of stationary friction surfaces (134) are interleaved therebetween. The stationary friction surfaces are keyed to the caliper housing (112) allowing for axial movement. The floating rotors are connected to the fixed rotor by pins (123), or are axially slidingly keyed at the inner radial periphery to splines (125) on the fixed rotor.

## Description

### BACKGROUND OF THE INVENTION

The present invention relates generally to a brake rotor assembly and caliper assembly, and to a combination floating rotor and fixed rotor for use with such assemblies, in particular to multi-disc brake assemblies.

Multi disc braking assemblies utilize a plurality of rotating rotors with stationary friction material interleaved therebetween. By using a plurality of rotors, the surface area of the friction material is increased, increasing braking ability and prolonging the life of the friction material.

In prior multi disc braking assemblies, the rotating rotors and the stationary friction material are axially moveable. The rotors and the friction material are disposed between pistons of a caliper housing. During braking, the pistons are actuated axially, pushing the rotating rotors and the friction material into frictional engagement with each other. As the axially moving rotors and frictional material engage each other, braking occurs.

Floating rotors are necessary with multi disc brakes. The floating rotors move axially and contact the stationary friction surface during braking. One problem with employing floating rotors is that "run-out" can occur. Run-out occurs because floating rotors wobble and are not constrained, causing undesirable feedback to the driver.

Hence, there is a need in the art for a combination floating rotor and fixed rotor for use with a multi disc brake assembly.

### SUMMARY OF THE INVENTION

The present invention relates generally to a brake rotor assembly and caliper assembly, and to a combination floating rotor and fixed rotor for use with such assemblies, in particular to multi-disc brake assemblies.

The multi disc brake assembly of the present invention includes a fixed caliper housing which bridges a fixed rotor attached to and rotating in combination with a wheel hub. A plurality of floating rotors are slidingly attached to the fixed rotor and a plurality of stationary friction surfaces are interleaved therebetween. The stationary friction surfaces are keyed to the caliper housing allowing for axial movement. The floating rotors are connected to the fixed rotor by pins.

During braking, the pistons on opposite ends of the caliper housing actuate inwardly, bringing the friction linings and friction surfaces into frictional engagement with the fixed rotor and the floating rotor, allowing for braking. The floating rotors slide inwardly along the pins towards the fixed rotor.

In another embodiment, the floating rotors are axially slidingly keyed at the inner radial periphery to splines on the fixed rotor. The floating rotors engage the spline allowing for axial movement of the floating rotors relative to the fixed rotor.

By utilizing a plurality of floating rotors slidingly attached to a fixed rotor, "run-out" can be reduced. There is less wobbling because the floating rotors are attached to the fixed rotor.

Accordingly, the present invention provides a combination floating rotor and fixed rotor for use with a multi disc brake assembly.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 illustrates a prior art multi disc brake assembly.
Figure 2 illustrates the multi disc brake assembly of the present invention employing a fixed rotor and a plurality of floating rotors interconnected by pins.
Figure 3 illustrates the multi disc brake assembly of the present invention employing a fixed rotor and a plurality of floating rotors splined to the fixed rotor.

### DETAILED DESCRIPTION OF THE PREFERRED EMBODIMENT

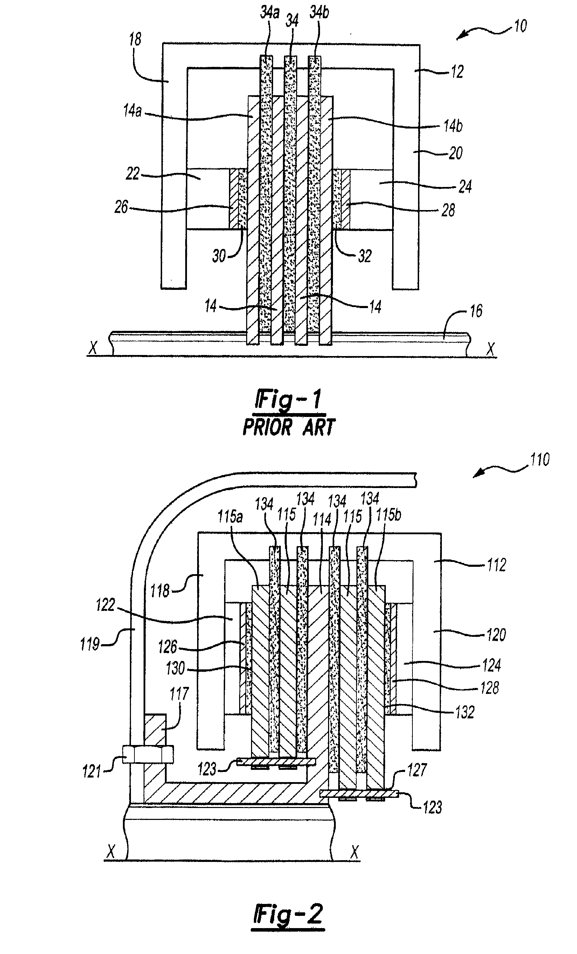

Figure 1 illustrates a cross-sectional view of half of a prior art multi disc brake assembly 10, the assembly 10 being symmetrical along line X-X. The assembly 10 includes a fixed caliper housing 12 which bridges a plurality of rotating rotors 14. The rotors 14 carry the wheel (not shown) and rotate in combination with an axle 16. The rotors 14 are axially slidably keyed at the radially inner periphery to the axle 16 and move axially relative to the axle 16.

The caliper housing 12 includes an outboard leg 18 and an inboard leg 20, both further including a piston 22 and 24, respectively, mounted for inward movement. Each piston 22 and 24 includes a shoe 26 and 28, respectively, and a friction lining 30 and 32, respectively, attached thereto. A plurality of stationary friction surfaces 34 are interleaved between the plurality of rotors 14. The stationary friction surfaces 34 are axially slidably keyed at the radially outer periphery to the caliper housing 12 and move axially relative to the caliper housing 12.

During braking, the actuation of a brake pedal (not shown) actuates the pistons 22 and 24 inwardly. As the friction linings 30 and 32 frictionally engage the outer rotors 14a and 14b, respectively, the rotors 14a and 14b are pushed inwardly, engaging outer friction surfaces 34a and 34b, respectively. As the pistons 22 and 24 continue to actuate, the rotors 14 slidably keyed to the axle 16 frictionally engage the interleaved stationary friction surface 34 slidably keyed to the caliper housing 12, resulting in braking.

Figure 2 illustrates the multi disc brake assembly 110 of the present invention, the assembly 110 being symmetrical along line X-X. The multi disc brake assembly 110 includes a fixed caliper housing 112 which bridges a fixed rotor 114. The fixed rotor 114 has a fixed face 117 attached to and rotating in combination with a wheel hub 119. The fixed face 117 and the hub 119 are attached by a bolt 121.

A plurality of floating rotors 115 are slidingly attached to the fixed rotor 114. In the illustrated embodiment four floating rotors 115 are shown, two floating rotors 115 positioned on each side of the fixed rotor 114. However, any number of floating rotors 115 in any orientation can be employed. The floating rotors 115 can be located on the inboard face of the fixed rotor 114 or the outboard face of the fixed rotor 114.

The caliper housing 112 includes an outboard leg 118 and an inboard leg 120, both of which further include a piston 122 and 124, respectively, mounted for inward movement.

Each piston 122 and 124 includes a shoe 126 and 128, respectively, and a friction lining 130 and 132, respectively.

A plurality of stationary friction surfaces 134 are interleaved between the rotors 114 and 115. The stationary friction surfaces 134 are keyed to the caliper housing 112, allowing for axial movement. The floating rotors 115 are slidingly connected to the fixed rotor 114 by pins 123. The pins 123 pass through aligned apertures 127 positioned proximate to the inner radial periphery of the floating rotors 115 and the fixed rotor 114. As the fixed rotor 114 rotates, the attached floating rotors 115 rotate in combination therewith.

During braking, the pistons 122 and 124 actuate inwardly by actuation of a brake pedal (not shown), bringing the friction linings 130 and 132 and friction surfaces 134 into frictional engagement with the fixed rotor 114 and the floating rotors 115. As the pistons 122 and 124 actuate, the friction linings 130 and 132, respectively, engage the outer floating rotors 115a, 115b, pushing the outer floating rotors 115a, 115b inwardly towards the fixed rotor 114. As the floating rotors 115 continue to travel inwardly along the pins 123 towards the fixed rotor 114, the floating rotors 115 and the fixed rotor 114 frictionally engage the interleaved stationary friction surfaces 134.

Although a caliper housing 112 having two pistons 122 and 124 is illustrated, a floating caliper housing 112 including only one piston 122 can be utilized. The caliper housing 112 moves in the direction opposite to the movement of the piston 122 during braking, frictionally engaging the fixed rotor 114, the floating rotors 115 and the friction surfaces 134 together.

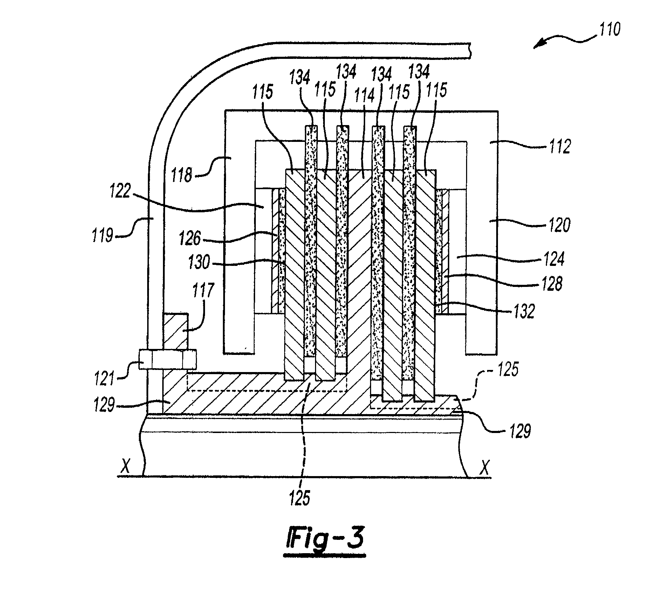

In an alternative embodiment, as shown in Fig. 3, the floating rotors 115 slidingly engage arms 129 of the fixed rotor 114. The floating rotors 115 are axially slidingly keyed at the inner radial periphery to splines 125 on the arms 129 of the fixed rotor 114. The floating rotors 115 engage the splines 125 to allow for axial movement of the floating rotors 115 relative to the fixed rotor 114 during braking.

There are several advantage to utilizing a multi disc braking assembly 110 employing a fixed rotor 114 with a plurality of axially moving floating rotors 115. For one, as the brake pedal is actuated and the floating rotors 115 are pressed against the fixed rotor 114, "run-out" or wobbling can be controlled because the plurality of floating rotors 115 are rotating relative to the constrained fixed rotor 114.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described.

For that reason the following claims should be studied to determine the true scope and content of this invention.

## Claims

1. , A brake rotor assembly comprising:
an axially static rotor (114);
an at least one axially translating rotor (115); and
an attachment means (123, 125) to slidingly connect said at least one axially translating rotor to said axially static rotor.

2. The brake rotor assembly as recited in claim 1 wherein a friction surface (134) is positioned between said axially static rotor and said at least one axially translating rotor.

3. The brake rotor assembly as recited in claim 2 wherein said brake rotor assembly is positioned within a caliper housing (112) including an at least one inwardly actuating piston (122, 124), the actuation of said piston allowing for frictional engagement of said axially static rotor, said at least one axially translating rotor, and said friction surface positioned therebetween.

4. A caliper assembly comprising:
a caliper housing (112) having a first leg (118) and a second leg (120);
a rotor body including an at least one translating rotor (115) and a fixed rotor (114) axially fixed relative to said at least one translating rotor and rotating in combination with a wheel, said rotor body positioned between said first leg and said second leg of said caliper housing;
an attachment means (123, 125) to slidingly connect said at least one translating rotor to said fixed rotor;
a friction surface (134) positioned between said fixed rotor and said at least one translating rotors; and
a piston (122, 124) positioned on at least one of said legs of said caliper housing, said piston actuating inwardly towards said fixed rotor to allow said fixed rotor and said at least one translating rotor to frictionally engage said friction surfaces positioned therebetween.

5. A caliper assembly comprising:
a caliper housing (112) having a first leg (118) and a second leg (120);
a rotor body including an at least one translating rotor (115) and a main rotor (114) translating less than said at least one translating rotor and rotating in combination with a wheel (119), said rotor body positioned between said first leg and said second leg of said caliper housing;
an attachment means (123, 120) to slidingly connect said at least one translating rotor to said main rotor;
a friction surface (134) positioned between said main rotor and said at least one translating rotors; and
a piston (122, 124) positioned on at least one of said legs of said caliper housing, said piston actuating inwardly towards said fixed rotor to allow said main rotor and said at least one translating rotor to frictionally engage said friction surfaces positioned therebetween.

6. The caliper assembly as recited in claim 5 wherein said main rotor is fixed relative to said at least one translating rotor.

7. The caliper assembly as recited in any one of claims 4 to 6 wherein each of said pistons further include a friction surface (130, 132).

8. The caliper assembly as recited in any one of claims 4 to 7 or the brake rotor assembly of claims 1 to 3 wherein said attachment means is positioned proximate to an inner radial periphery of said at least one translating rotor.

9. The caliper assembly as recited in any one of claims 4 to 8 or the brake rotor assembly of claims 1 to 3 wherein said attachment means is a pin (123).

10. The caliper assembly as recited in any one of claims 4 to 9 or the brake rotor assembly of claims 1 to 3 wherein said attachment means is a spline (125).
